# EUROPÄISCHE PATENTSCHRIFT

(11) **EP 3 740 723 B1**
(45) Veröffentlichungstag und Bekanntmachung des Hinweises auf die Patenterteilung: **14.06.2023**
(21) Anmeldenummer: 19706002.3
(22) Anmeldetag: 15.01.2019
(51) Int. Cl.: F24F 13/20, F16L 41/02, F24F 13/02

(54) **LUFTVERTEILER FÜR EIN LUFTVERTEILUNGSSYSTEM**
AIR DISTRIBUTOR FOR AN AIR DISTRIBUTION SYSTEM
DISTRIBUTEUR D'AIR POUR UN SYSTÈME DE VENTILATION

(30) Priorität: 15.01.2018 CH 432018
(43) Veröffentlichungstag der Anmeldung: 25.11.2020
(73) Patentinhaber: Zehnder Group International AG, 5722 Gränichen (CH); Taracell AG, 5444 Künten (CH)
(72) Erfinder: PISTORIUS, Gabriel, 77654 Offenburg (DE); HECKER, Sebastian, 6024 Hildisrieden (CH); SCHAFFHAUSER, Marcel, 5630 Muri AG (CH); FLURY, Vinzenz, 3400 Burgdorf (CH); SCHIRM-MARZOLF, Aline, 5444 Künten (CH)
(74) Vertreter: Rentsch Partner AG
(86) Internationale Anmeldenummer: PCT/IB2019/050287
(87) Internationale Veröffentlichungsnummer: WO 2019/138388

(56) Entgegenhaltungen:
- EP-A2- 1 959 208
- EP-A2- 1 959 209
- GB-A- 2 520 756

## Beschreibung

Die Erfindung bezieht sich auf einen Luftverteiler zur Luftverteilung in einem Luftverteilungssystem.

Derartige Luftverteiler sind bekannt. So offenbart z.B. die EP 1 959 208 A1 einen Luftverteiler mit einem eine Luftverteilungskammer bildenden, mehrteiligen Gehäuse, das zum Verteilen und/oder Zusammenführen von Luftströmen mehrere Luftführungsanschlüsse aufweist. Dabei offenbart die EP 1959 208 A1 einen Luftverteiler mit den Merkmalen des Oberbegriffs von Anspruch 1.

Dieses mehrteilige Gehäuse ist aus expandiertem Homopolymerisat gebildet. Die Gehäusewand des mehrteiligen Gehäuses wird durch eine erste Gehäuseschale, eine zweite Gehäuseschale und mindestens ein weiteres separates Wandelement gebildet, das zwischen der ersten Gehäuseschale und der zweiten Gehäuseschale angeordnet ist und zumindest einen Lüftungsanschluss aufweist. Dies ermöglicht die Bereitstellung einer Vielzahl verschieden konfigurierter Luftverteiler, indem man bei stets gleicher erster Gehäuseschale und bei stets gleicher zweiter Gehäuseschale lediglich das mindestens eine separate Wandelement spezifisch ausbildet, indem man z.B. ein separates Wandelement mit einem, zwei, drei oder noch mehr Lüftungsanschlüssen verwendet.

Der Erfindung liegt die Aufgabe zugrunde, einen derartigen bekannten Luftverteiler zu vereinfachen.

Zur Lösung dieser Aufgabe stellt die Erfindung einen Luftverteiler zur Luftverteilung in einem Luftverteilungssystem gemäß Anspruch 1 bereit. Dabei ist vorgesehen, dass der Luftverteiler mindestens ein Gehäuse mit jeweils mehreren Öffnungen für das Einströmen von Luft in das Gehäuse oder für das Ausströmen von Luft aus dem Gehäuse aufweist, wobei das mindestens eine Gehäuse eine erste Gehäuseschale aus expandiertem Polymermaterial und eine zweite Gehäuseschale aus expandiertem Polymermaterial aufweist, die in einem Schalen-Berührungsbereich aneinander anliegen und eine Luftverteilungskammer bilden, wobei erfindungsgemäss die mehreren Öffnungen des Gehäuses in dem Schalen-Berührungsbereich angeordnet sind.

Durch das Anordnen der mehreren Öffnungen des Gehäuses in dem Schalen-Bereich kann auf das die Konfiguration der Lüftungsanschlüsse bestimmende, mindestens eine weitere separate Wandelement verzichtet werden.

Weitere vorteilhafte Ausführungen des erfindungsgemässen Luftverteilers sind in den Ansprüchen 2 bis 14 definiert.

Vorzugsweise sind die mehreren Öffnungen durch erste Aussparungen bzw. Einbuchtungen der Schalenwand an einem Rand der ersten Gehäuseschale und/oder durch zweite Aussparungen bzw. Einbuchtungen der Schalenwand an einem Rand der zweiten Gehäuseschale gebildet. Derartige Gehäuseschalen lassen sich durch Expandieren eines Polymermaterials in einer Expansionsform leicht herstellen.

Vorzugsweise sind die ersten Aussparungen erste halbkreisförmige, rechteckförmige, dreieckförmige oder trapezförmige Einbuchtungen an der ersten Gehäuseschale und die zweiten Aussparungen zweite halbkreisförmige, rechteckförmige, dreieckförmige oder trapezförmige Einbuchtungen an der zweiten Gehäuseschale.

Vorzugsweise sind die Aussparungen bzw. Einbuchtungen der ersten Gehäuseschale und die Aussparungen bzw. Einbuchtungen der zweiten Gehäuseschale in dem Schalen-Berührungsbereich gegenüberliegend und aneinander angrenzend angeordnet. Eine jeweilige Einbuchtung/Aussparung der ersten Gehäuseschale bildet zusammen mit einer jeweiligen entsprechenden Einbuchtung/Aussparung der zweiten Gehäuseschale eine jeweilige Öffnung des Luftverteiler-Gehäuses.

Vorzugsweise sind die Aussparungen der ersten Gehäuseschale zu den Aussparungen der zweiten Gehäuseschale symmetrisch. Dadurch können die erste und die zweite Gehäuseschale eine identische Form/Gestalt haben, so dass man zur Herstellung nicht mehrere unterschiedlich gestaltete, sondern nur eine Art von Expansionsform benötigt.

Vorzugsweise hat das mindestens eine Gehäuse eine erste Hauptöffnung und eine zweite Hauptöffnung, zwischen denen durch den Luftverteiler ein Hauptluftstrom entlang einer Gehäuseachse strömen kann, wobei in mindestens eine der Öffnungen ein Nebenluftstrom in den Hauptluftstrom einströmen kann und/oder aus mindestens einer der Öffnungen ein Nebenluftstrom aus dem Hauptluftstrom ausströmen kann.

Erfindungsgemäß enthält der Luftverteiler einen den Schalen-Berührungsbereich aufweisenden ersten Seitenwandbereich und einen den Schalen-Berührungsbereich aufweisenden zweiten Seitenwandbereich sowie einen sich zwischen den beiden Seitenwandbereichen erstreckenden Deckenwandbereich und einen sich zwischen den beiden Seitenwandbereichen erstreckenden Bodenwandbereich. Vorzugsweise ist die quer zur Längsrichtung des Luftverteilers gemessene Breite bei den beiden Seitenwandbereichen geringer als die quer zur Längsrichtung des Luftverteilers gemessene Breite des Deckenwandbereichs und des Bodenwandbereichs. Vorzugsweise ist mindestens eine der jeweils mehreren Öffnungen des mindestens einen Gehäuses in dem ersten Seitenwandbereich und/oder in dem zweiten Seitenwandbereich angeordnet.

Gemäß der Erfindung sind in dem ersten Seitenwandbereich und in dem zweiten Seitenwandbereich jeweils ein **Versteifungselement** enthalten, welches in das expandierte Polymermaterial eingebettet ist. Das Versteifungselement kann aus einem massiven (nichtexpandierten) Polymermaterial oder aus einem metallischen Material gebildet sein. Vorzugsweise erstreckt sich das Versteifungselement über den Schalen-Berührungsbereich hinweg von der ersten Gehäuseschale zu der zweiten Gehäuseschale hin.

Vorzugsweise enthalten die erste Gehäuseschale und die zweite Gehäuseschale in ihrem jeweiligen Schalen-Berührungsbereich eine Vertiefung, in welche jeweils ein Teilbereich des Versteifungselements eingeschoben werden kann.

Vorzugsweise bilden die Vertiefung der ersten Gehäuseschale und die Vertiefung der zweiten Gehäuseschale bei aneinander liegenden Gehäuseschalen einen zu dem Versteifungselement komplementären Hohlraum. Das Versteifungselement kann dadurch passgenau / ohne Spiel in die beiden Gehäuseschalen eingefügt werden. Vorzugsweise ist der Elastizitätsmodul (Steifigkeit) des Versteifungselements grösser als der Elastizitätsmodul (Steifigkeit) des expandierten Polymermaterials, wobei eine Abmessung, z.B. eine Länge, Breite oder Dicke, des komplementären Hohlraums in mindestens einer Raumrichtung kleiner als die entsprechende Abmessung, z.B. eine Länge, Breite oder Dicke, des Versteifungselements. Beim Einfügen des Versteifungselements in die beiden Gehäuseschalen werden diese elastisch verformt, wodurch die hermetische Abdichtung zwischen den Gehäuseschalen und dem Versteifungselement verbessert wird.

Bei einer weiteren besonders bevorzugten Ausführung enthält der Luftverteiler in dem mindestens einen Gehäuse jeweils mindestens eine **Stützrippe,** welche sich zwischen dem Deckenwandbereich und dem Bodenwandbereich in der Luftverteilungskammer erstreckt. Eine derartige Stützrippe erhöht die mechanische Stabilität des Luftverteilers gegenüber vertikaler Krafteinwirkung. Dies ist auf der Baustelle vor und während des Einbaus des Luftverteilers wichtig, falls ein Bauarbeiter auf den Luftverteiler tritt oder sich auf diesen stellt, sowie beim Einbau, insbesondere im Falle des Einbetonierens des Luftverteilers in eine Decke.

Bei einer weiteren besonders bevorzugten Ausführung des Luftverteilers sind mehrere Öffnungen des mindestens einen Gehäuses in dem ersten Seitenwandbereich und mehrere Öffnungen des mindestens einen Gehäuses in dem zweiten Seitenwandbereich angeordnet, wobei eine sich zwischen dem Deckenwandbereich und dem Bodenwandbereich erstreckende jeweilige Stützrippe im Innern des Luftverteilers an einem Ort angeordnet ist, welcher sich auf einer geraden Verbindungslinie zwischen einer Öffnung des ersten Seitenwandbereichs und einer zu dieser Öffnung nächstliegenden Öffnung des zweiten Seitenwandbereichs befindet. Die derartige Stützrippe erhöht dadurch nicht nur die mechanische Stabilität des Luftverteilers gegenüber vertikaler Krafteinwirkung, sondern stellt auch eine Barriere für Luftschall dar, welcher sich im Innern des Luftverteilers von einer Öffnung des ersten Seitenwandbereichs zu einer Öffnung des zweiten Seitenwandbereichs hin ausbreitet (sog. Telefonieschall).

Vorzugsweise befindet sich eine Stützrippe auf jeder Verbindungslinie zwischen einer Öffnung des ersten Seitenwandbereichs und einer zu dieser Öffnung nächstliegenden Öffnung des zweiten Seitenwandbereichs. Dadurch wird eine sehr wirksame Unterdrückung von ungewolltem Telefonieschall erreicht.

Vorzugsweise haben die erste Gehäuseschale und die zweite Gehäuseschale jeweils mindestens eine Erhebung bzw. einen Aufsatz, welche bzw. welcher in dem Schalen-Berührungsbereich aneinander liegen und gemeinsam die mindestens eine Stützrippe bilden. Vorzugsweise hat die Erhebung bzw. der Aufsatz der ersten Gehäuseschale eine erste Formation, z.B. Ausbuchtung oder Vertiefung, und die Erhebung bzw. der Aufsatz der zweiten Gehäuseschale eine zur ersten Formation komplementäre Formation, z.B. Vertiefung bzw. Ausbuchtung. Dadurch wird gewährleistet, dass beim Zusammenfügen der beiden Gehäuseschalen die Stützrippe im Innern des Luftverteilers richtig erstellt wird.

Vorzugsweise ist die mindestens eine Stützrippe in einer Richtung des Hauptluftstroms entlang der Gehäuseachse stromlinienförmig ausgebildet. Dadurch wird der durch die Stützrippe verursachte Luftwiderstand im Innern des Luftverteilers minimiert.

Vorzugsweise hat ein Querschnitt der Stützrippe entlang einer sich parallel zwischen dem Deckenwandbereich und dem Bodenwandbereich erstreckenden Schnittebene eine Symmetrieachse parallel zur Gehäuseachse.

Vorzugsweise hat ein Querschnitt der Stützrippe entlang einer sich orthogonal zwischen dem Deckenwandbereich und dem Bodenwandbereich erstreckenden Schnittebene eine Symmetrieachse orthogonal zur Gehäuseachse.

Besonders bevorzugt ist ein Querschnitt der Stützrippe entlang einer sich parallel zwischen dem Deckenwandbereich und dem Bodenwandbereich erstreckenden Schnittebene linsenförmig. Dies trägt zur Minimierung des Luftwiderstands im Innern des Luftverteilers bei.

Bei einer speziellen Ausführung wird einerseits die Querschnittsfläche eines Querschnitts der Stützrippe von dem Deckenwandbereich zur Gehäuseachse hin kontinuierlich kleiner und wird andererseits die Querschnittsfläche eines Querschnitts der Stützrippe von dem Bodenwandbereich zur Gehäuseachse hin kontinuierlich kleiner. Dies trägt ebenfalls zur Minimierung des Luftwiderstands im Innern des Luftverteilers bei.

Vorzugsweise sind der Übergangsbereich zwischen der Stützrippe und dem Deckenwandbereich sowie der Übergangsbereich zwischen der Stützrippe und dem Bodenwandbereich abgerundet. Dies trägt sowohl zur Erhöhung der mechanischen Stabilität des Luftverteilers als auch zur Minimierung des Luftwiderstands im Innern des Luftverteilers bei.

Bei einer weiteren besonders bevorzugten Ausführung enthält der Luftverteiler mindestens einen **Befestigungsbügel,** welcher sich entlang des Deckenwandbereichs sowie entlang des ersten Seitenwandbereichs und entlang des zweiten Seitenwandbereichs an der Aussenseite des Luftverteilers erstreckt. Dies ermöglicht das Befestigen des Luftverteilers an einer Fläche und trägt ebenfalls zur Erhöhung der mechanischen Stabilität des Luftverteilers bei.

Vorzugsweise ist der Befestigungsbügel höhenverstellbar. Dies ermöglicht eine passgenaue Fixierung des Luftverteilers an einer Fläche, wobei insbesondere eine Fixierung des Luftverteilers unter geringfügiger elastischer Kompression des Luftverteilers möglich ist.

Vorzugsweise hat der Befestigungsbügel einen Abschnitt mit Eingriffsformationen, welche in korrespondierende Vertiefungen an der Aussenseite des mindestens einen Gehäuses des Luftverteilers eingreifen. Dies ermöglicht eine sichere Fixierung des Luftverteilers an einer Fläche.

Vorzugsweise hat der Befestigungsbügel an seinem ersten Ende sowie an seinem zweiten Ende jeweils ein Loch für ein Fixiermittel, z.B. eine Schraube, ein Nagel oder dgl.. Dies ermöglicht eine sichere Fixierung des Luftverteilers an einer Fläche.

Vorzugsweise hat der Befestigungsbügel in einem Übergangsbereich zwischen seinem ersten Ende und seinem Abschnitt mit den Eingriffsformationen sowie in einem Übergangsbereich zwischen seinem zweiten Ende und seinem Abschnitt mit den Eingriffsformationen jeweils ein Loch für ein Fixiermittel, z.B. eine Schraube, ein Nagel oder dgl.. Dies trägt zur sicheren Fixierung des Luftverteilers bei.

Bei einer weiteren bevorzugten Ausführung enthält der Luftverteiler mindestens ein **Befestigungsband,** welches sich entlang des Deckenwandbereichs sowie entlang des ersten Seitenwandbereichs und entlang des zweiten Seitenwandbereichs an der Aussenseite des Luftverteilers erstreckt. Auch dies ermöglicht das Befestigen des Luftverteilers an einer Fläche und trägt ebenfalls zur Erhöhung der mechanischen Stabilität des Luftverteilers bei.

Vorzugsweise kann das Befestigungsband in korrespondierende Vertiefungen an der Aussenseite des mindestens einen Gehäuses des Luftverteilers eingreifen. Auch dies ermöglicht eine sichere Fixierung des Luftverteilers an einer Fläche.

Vorzugsweise hat das Befestigungsband an seinem ersten Ende sowie an seinem zweiten Ende jeweils ein Loch für ein Fixiermittel, z.B. eine Schraube, ein Nagel oder dgl.. Auch dies ermöglicht eine sichere Fixierung des Luftverteilers an einer Fläche.

Vorzugsweise hat das Befestigungsband eine Dicke von 0.5 mm bis 2 mm.

Vorzugsweise enthält das Befestigungsband ein Polymermaterial, insbesondere einen Thermoplasten oder ein Elastomer. Dadurch wird eine ausreichende Flexibilität des Bandes gewährleistet.

Vorzugsweise ist das Befestigungsband ein Textilband, welches Polymerfasern und/oder Metallfasern aufweist. Auch dadurch wird eine ausreichende Flexibilität des Bandes gewährleistet.

Vorzugsweise sind die erste Gehäuseschale und die zweite Gehäuseschale zueinander symmetrisch, vorzugsweise spiegelsymmetrisch und/oder punktsymmetrisch, und insbesondere identisch bzw. deckungsgleich.

Das expandierte Polymermaterial der ersten Gehäuseschale und der zweiten Gehäuseschale können ein expandiertes Homo-Polymerisat wie z.B. expandiertes Polypropylen (EPP), expandiertes Polystyrol (EPS), expandiertes Polyethylen (EPE) oder expandiertes Polylactid (EPLA) sein.

Das expandierte Polymermaterial der ersten Gehäuseschale und der zweiten Gehäuseschale kann ein expandiertes Co-Polymerisat sein, welches zumindest Propylen, Styrol, Ethylen oder Milchsäure als Komponente aufweist.

Das expandierte Polymermaterial der ersten Gehäuseschale und der zweiten Gehäuseschale können ein Gemisch aus expandiertem Homo-Polymerisat wie z.B. expandiertem Polypropylen (EPP), expandiertem Polystyrol (EPS), expandiertem Polyethylen (EPE) oder expandiertem Polylactid (EPLA) sein.

Das expandierte Polymermaterial der ersten Gehäuseschale und der zweiten Gehäuseschale können ein Gemisch aus expandiertem Co-Polymerisat wie z.B. expandiertem Polypropylen (EPP), expandiertem Polystyrol (EPS), expandiertem Polyethylen (EPE) oder expandiertem Polylactid (EPLA) sein.

Das expandierte Polymermaterial der ersten Gehäuseschale und der zweiten Gehäuseschale kann ein Gemisch aus expandiertem Homo-Polymerisat und Co-Polymerisat sein, welches zumindest Propylen, Styrol, Ethylen oder Milchsäure als Komponente aufweist.

Vorzugsweise hat das expandierte Polymermaterial eine Dichte von 30 bis 60 kg/m³, vorzugsweise von 40 bis 60 kg/m³.

Vorzugsweise hat der Luftverteiler Wanddicken von 15 bis 50 mm, vorzugsweise von 25 bis 50 mm hat.

Vorzugsweise betragen die Partikeldurchmesser des expandierten Polymers 2 bis 6 mm, vorzugsweise 3 bis 5 mm.

Vorzugsweise liegt das Verhältnis der minimalen Wanddicken zu den Partikeldurchmessern im Bereich von 5 bis 30, besonders bevorzugt im Bereich von 10 bis 30. Dies trägt zur Erhöhung der mechanischen Stabilität des Luftverteilers bei.

Vorzugsweise haben der Deckenwandbereich und/oder der Bodenwandbereich zumindest in Teilbereichen eine nach aussen ragende Wölbung. Auch dies trägt zur Erhöhung der mechanischen Stabilität des Luftverteilers bei.

Vorzugsweise haben der Deckenwandbereich (W3) und/oder der Bodenwandbereich zumindest in Teilbereichen eine sich entlang des jeweiligen Wandbereichs erstreckende Versteifungsrippe. Auch dies trägt zur Erhöhung der mechanischen Stabilität des Luftverteilers bei.

Bei einer speziellen Ausführung hat Luftverteiler noch mindestens ein weiteres Gehäuse, welches eine erste Hauptöffnung und mindestens eine alternative oder weitere erste Hauptöffnung hat.

Vorzugsweise hat das mindestens eine Gehäuse zusätzlich zu den jeweils mehreren Öffnungen für das Einströmen und Ausströmen von Luft in das bzw. aus dem Gehäuse noch eine Inspektionsöffnung, welche mittels eines Inspektionsdeckels verschliessbar ist.

Bei einer speziellen Ausführung ist das mindestens eine Gehäuse mindestens ein erstes Gehäuse des Luftverteilers, welches eine erste Hauptöffnung und eine zweite Hauptöffnung sowie vier Öffnungen in dem ersten Seitenwandbereich und vier Öffnungen in dem zweiten Seitenwandbereich hat.

Bei einer weiteren speziellen Ausführung ist das mindestens eine Gehäuse mindestens ein zweites Gehäuse des Luftverteilers, welches eine erste Hauptöffnung und eine zweite Hauptöffnung sowie eine einzige Öffnung in dem ersten Seitenwandbereich und eine einzige Öffnung in dem zweiten Seitenwandbereich hat.

Vorzugsweise ist in dem mindestens einen Gehäuse mindestens ein Funktionselement enthalten.

Das mindestens eine Funktionselement kann aus der Gruppe von Elementen ausgewählt sein, welche einen Sensor, einen Sender, einen Empfänger oder einen Datenspeicher enthält.

Vorzugsweise hat die äussere Oberfläche des mindestens einen Gehäuses eine Oberflächenrauhigkeit von 0.1 mm bis 2 mm. Dies trägt zu einer verbesserten Haftung des Luftverteilers an dem Beton bei, in welchem er einbetoniert wird.

Vorzugsweise besitzt die innere Oberfläche des mindestens einen Gehäuses zumindest in Teilbereichen einen offenporigen Schaum. Dies trägt zur Absorption von Luftschall im Innern des Luftverteilers bei.

Weitere Vorteile, Merkmale und Anwendungsmöglichkeiten der Erfindung ergeben sich aus der nicht einschränkend aufzufassenden Zeichnung, welche mehrere Ausführungsbeispiele des erfindungsgemässen Luftverteilers zeigen, wobei
Fig. 1 ein erstes Ausführungsbeispiel des erfindungsgemässen Luftverteilers in einer ersten Perspektivansicht zeigt;
Fig. 2 das erste Ausführungsbeispiel des erfindungsgemässen Luftverteilers in einer zweiten Perspektivansicht zeigt;
Fig. 3 ein erstes Gehäuse als Teil des erfindungsgemässen Luftverteilers in einer ersten Perspektivansicht zeigt;
Fig. 4 das erste Gehäuse als Teil des erfindungsgemässen Luftverteilers in einer zweiten Perspektivansicht zeigt;
Fig. 5 eine Gehäuseschale als Teil des ersten Gehäuses in einer Perspektivansicht zeigt;
Fig. 6 ein im Innern des ersten Gehäuses anzubringendes Versteifungselement des ersten Gehäuses zeigt;
Fig. 7 einen zur Befestigung des Luftverteilers an einem Bodenbereich, Deckenbereich oder Wandbereich dienenden Befestigungsbügel zeigt;
Fig. 8 den an einem Luftverteiler angebrachten Befestigungsbügel zeigt;
Fig. 9 ein zweites Gehäuse als Teil des erfindungsgemässen Luftverteilers in einer ersten Perspektivansicht zeigt;
Fig. 10 das zweite Gehäuse als Teil des erfindungsgemässen Luftverteilers in einer zweiten Perspektivansicht zeigt;
Fig. 11 ein drittes Gehäuse als Teil des erfindungsgemässen Luftverteilers in einer Perspektivansicht zeigt;
Fig. 12 die Gehäuseschale der Fig. 5 als Teil des ersten Gehäuses in einer Perspektivansicht und vergrössert zeigt;
Fig. 13 eine schematische Längsschnitt-Ansicht eines zweiten Ausführungsbeispiels des erfindungsgemässen Luftverteilers zeigt;
Fig. 14 eine schematische Längsschnitt-Ansicht eines dritten Ausführungsbeispiels des erfindungsgemässen Luftverteilers zeigt;
Fig. 15 ein erstes Gehäuse eines vierten Ausführungsbeispiels des erfindungsgemässen Luftverteilers in einer Perspektivansicht zeigt; und
Fig. 16 ein zweites Gehäuse des vierten Ausführungsbeispiels des erfindungsgemässen Luftverteilers in einer Perspektivansicht zeigt.

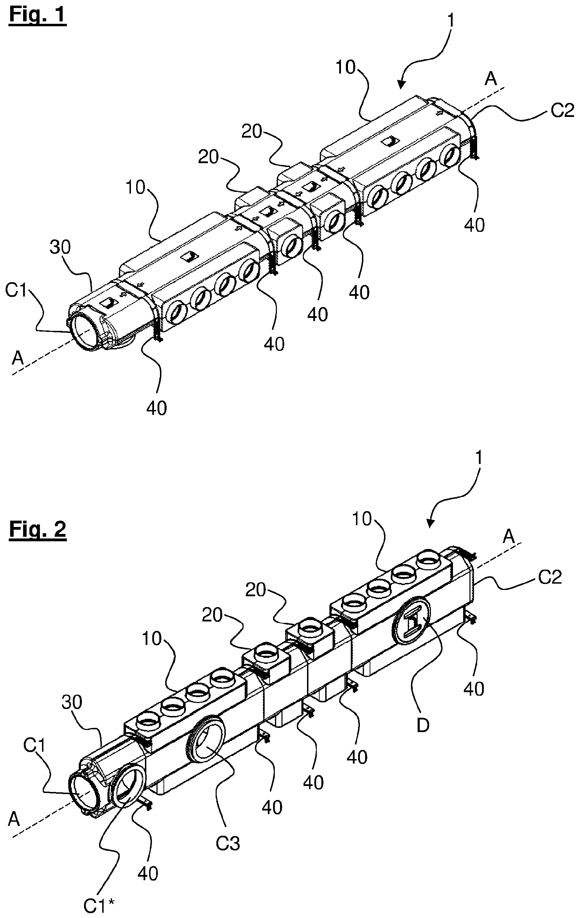

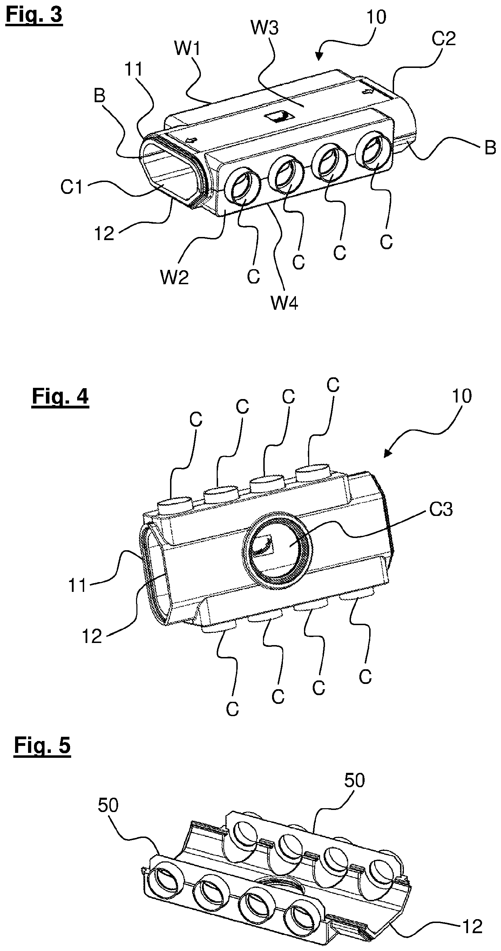

In Fig. 1 ist ein erstes Ausführungsbeispiel des erfindungsgemässen Luftverteilers 1 in einer ersten Perspektivansicht gezeigt. Der Luftverteiler 1 enthält zwei erste Gehäuse (erste Gehäusetypen) 10), zwei zweite Gehäuse (zweite Gehäusetypen) 20 und ein drittes Gehäuse (dritter Gehäusetyp) 30. Die Gehäuse sind in einer Gehäuseanordnung gemäss Schema 10-20-20-10-30 in Serie miteinander verbunden und definieren eine Gehäuseachse A. Die Verbindung benachbarter Gehäuse ist eine Steckverbindung. Der so gebildete Luftverteiler 1 hat eine erste Hauptöffnung C1 an seinem ersten Längsende, eine zweite Hauptöffnung C2 an seinem zweiten Längsende und mehrere entlang der Längsrichtung beabstandete Öffnungen C (siehe auch Fig. 3 und Fig 4). Der Luftverteiler 1 enthält mehrere Befestigungsbügel 40, mit denen er an einer ebenen Fläche, wie z.B. einer Schaltafel, befestigt werden kann.

In Fig. 2 ist das erste Ausführungsbeispiel des erfindungsgemässen Luftverteilers in einer zweiten Perspektivansicht gezeigt. Man erkennt die Gehäuse (Gehäusetypen) 10, 20 und 30 sowie eine alternative oder weitere Hauptöffnung C1* oder C3, die auch als Revisionsöffnungen dienen können. Eine dieser weiteren Hauptöffnungen ist mit einem Deckel D verschlossen (Revisionsdeckel).

In Fig. 3 ist das erste Gehäuse 10 als Teil des erfindungsgemässen Luftverteilers 1 in einer ersten Perspektivansicht gezeigt. Das Gehäuse 10 hat einen ersten Seitenwandbereich W1, einen zweiten Seitenwandbereich W2, einen Deckenwandbereich W3 und einen Bodenwandbereich W4. Das Gehäuse 10 hat an seinem ersten (abgewandten und in Fig. 3 nicht sichtbaren) Seitenwandbereich W1 vier seitliche Öffnungen C sowie an seinem zweiten Seitenwandbereich W2 vier seitliche Öffnungen C. Ausserdem erkennt man eine erste Hauptöffnung C1 und eine zweite Hauptöffnung C2. Man erkennt auch, dass das Gehäuse 10 aus einer ersten Gehäuseschale 11 und einer zweiten Gehäuseschale 12 zusammengesetzt ist, welche einander in einem Schalen-Berührungsbereich B berühren.

In Fig. 4 ist das erste Gehäuse1 0 als Teil des erfindungsgemässen Luftverteilers 1 in einer zweiten Perspektivansicht gezeigt, in welcher man die weitere Hauptöffnung bzw. Revisionsöffnung C3 des Gehäuses 10 erkennt.

In Fig. 5 ist die zweite Gehäuseschale 12 als Teil des ersten Gehäuses 10 in einer Perspektivansicht gezeigt. Man erkennt jeweils ein Versteifungselement 50 in Form einer Lochplatte in dem ersten Seitenwandbereich W1 und in dem zweiten Seitenwandbereich W2 (siehe auch Fig. 3) der zweiten Gehäuseschale 12. Das jeweilige Versteifungselement 50 ragt sowohl in die zweite Gehäuseschale 12 als auch in die erste Gehäuseschale 11 des Gehäuses 10 (siehe auch Fig. 3).

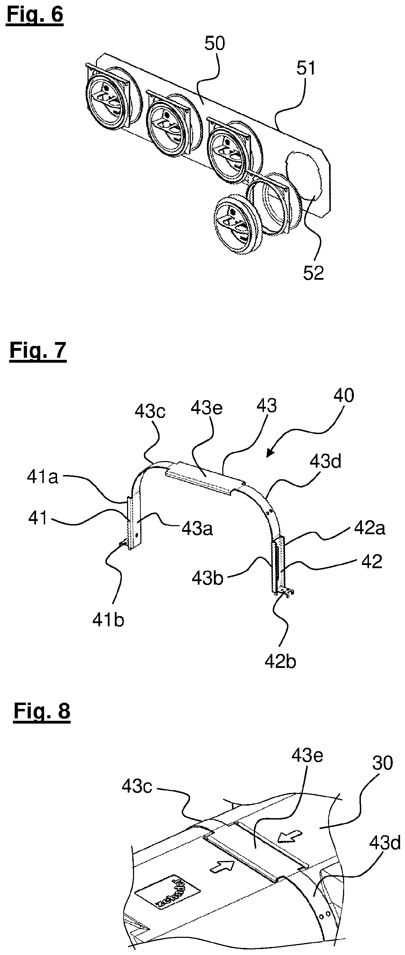

In Fig. 6 ist das im Innern des ersten Gehäuses 10 anzubringende Versteifungselement 50 gezeigt. Das Versteifungselement 50 ist eine Platte 50 mit mehreren Löchern 52, in welchen jeweils eine Hülse 53 fixierbar ist. Die jeweilige Hülse 53 enthält einen etwa U-förmigen Bügel 54, mit welchem man ein in eine jeweilige Hülse 53 und somit in ein jeweiliges Loch 52 des Versteifungselements 50 ragendes Ende eines Wellrohres (nicht gezeigt) in der Hülse 52 formschlüssig fixieren kann.

In Fig. 7 ist ein zur Befestigung des Luftverteilers 1 an einem Bodenbereich, Deckenbereich oder Wandbereich dienender Befestigungsbügel 40 gezeigt, welcher im wesentlichen U-förmig ist und dafür ausgelegt ist, um sich entlang des Deckenwandbereichs W3 sowie entlang des ersten Seitenwandbereichs W1 und entlang des zweiten Seitenwandbereichs W2 an der Aussenseite des Luftverteilers 1 zu erstrecken. Der Befestigungsbügel 40 hat einen ersten Endbereich 41, einen zweiten Endbereich 42 und dazwischen einen Zwischenabschnitt 43 sowie einen ersten gekrümmten Übergangsbereich 43c zwischen dem ersten Endbereich 41 und dem Zwischenabschnitt 43 sowie einen zweiten gekrümmten Übergangsbereich 43d zwischen dem zweiten Endbereich 42 und dem Zwischenabschnitt 43.

Der Befestigungsbügel 40 hat in seinem Zwischenabschnitt 43 Eingriffsformationen 43e, welche in korrespondierende Vertiefungen an der Aussenseite des Gehäuses 10, 20 oder 30 des Luftverteilers 1 eingreifen können.

Ausserdem hat der Befestigungsbügel 40 in seinem Übergangsbereich 43c sowie in seinem Übergangsbereich 43d jeweils ein Loch für ein Fixiermittel, wie z.B. eine Schraube, ein Nagel oder dgl..

Der Befestigungsbügel 40 ist höhenverstellbar. Hierfür hat er in seinem ersten Endbereich 41 eine erste höhenverstellbare Schiene 41a und in seinem zweiten Endbereich 42 eine zweite höhenverstellbare Schiene 42a.

In Fig. 8 ist der an einem Luftverteiler-Gehäuse 10 oder 20 angebrachte Befestigungsbügel 40 gezeigt. Man erkennt den ersten Übergangsbereich 43c und den zweiten Übergangsbereich 43d sowie dazwischen den Zwischenabschnitt 43 mit den Eingriffsformationen 43e, welche mit korrespondierenden Vertiefungen an der Aussenseite des Gehäuses 30 in Eingriff sind.

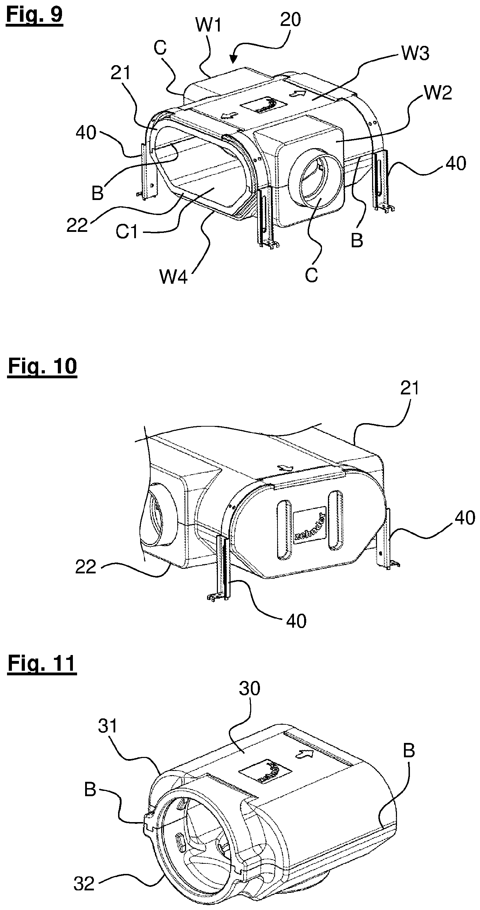

In Fig. 9 ist das zweite Gehäuse 20 als Teil des erfindungsgemässen Luftverteilers 1 in einer ersten Perspektivansicht gezeigt. Das Gehäuse 20 hat einen ersten Seitenwandbereich W1, einen zweiten Seitenwandbereich W2, einen Deckenwandbereich W3 und einen Bodenwandbereich W4. Das Gehäuse 20 hat an seinem ersten (abgewandten und in Fig. 9 nicht sichtbaren) Seitenwandbereich W1 eine seitliche Öffnung C sowie an seinem zweiten Seitenwandbereich W2 eine seitliche Öffnung C. Ausserdem erkennt man eine erste Hauptöffnung C1 und eine zweite Hauptöffnung C2. Man erkennt auch, dass das Gehäuse 20 aus einer ersten Gehäuseschale 21 und einer zweiten Gehäuseschale 22 zusammengesetzt ist, welche einander in einem Schalen-Berührungsbereich B berühren.

In Fig. 10 ist das zweite Gehäuse 20 als Teil des erfindungsgemässen Luftverteilers 1 in einer zweiten Perspektivansicht gezeigt.

In Fig. 11 ist das dritte Gehäuse 30 als Teil des erfindungsgemässen Luftverteilers in einer Perspektivansicht gezeigt. Man erkennt auch, dass das Gehäuse 30 aus einer ersten Gehäuseschale 31 und einer zweiten Gehäuseschale 32 zusammengesetzt ist, welche einander in einem Schalen-Berührungsbereich B berühren.

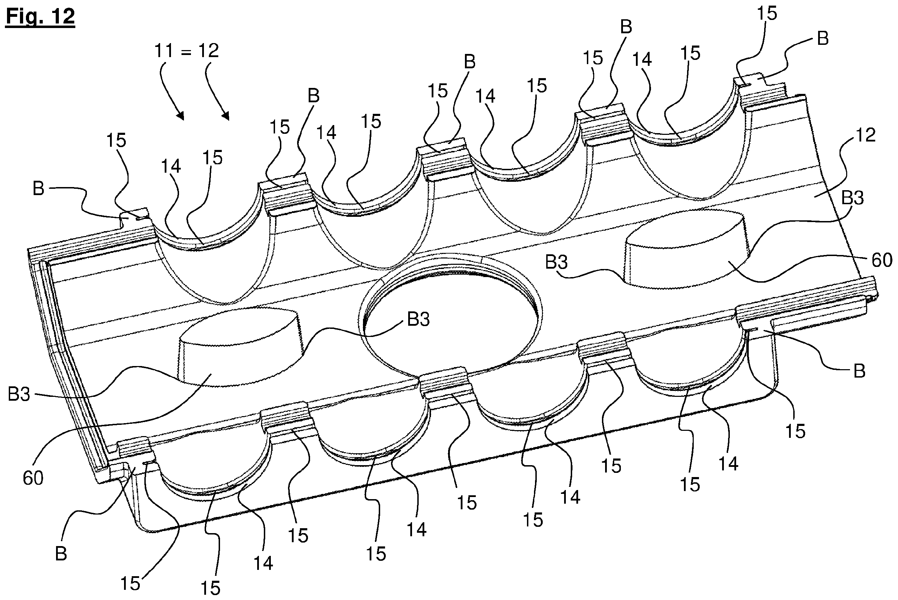

Fig. 12 die zweite Gehäuseschale 12 der Fig. 5 als Teil des ersten Gehäuses 10 in einer Perspektivansicht und vergrössert gezeigt. Die erste Gehäuseschale 11 (in Fig. 12 nicht gezeigt) hat dieselbe Gestalt wie die zweite Gehäuseschale 12. Die erste Gehäuseschale 11 und die zweite Gehäuseschale 12 haben in ihrem jeweiligen Schalen-Berührungsbereich B jeweils vier halbkreisförmige Einbuchtungen 14 in dem ersten Seitenwandbereich W1 (siehe Fig. 3) und in dem zweiten Seitenwandbereich W2. Diese halbkreisförmigen Einbuchtungen 14 stellen jeweils eine obere und eine untere Hälfte der kreisförmigen Öffnungen C des ersten Gehäuses 10 dar, in welchen jeweils eine Hülse 54 (siehe Fig. 6) fixiert werden kann.

Die erste Gehäuseschale 11 und die zweite Gehäuseschale 12 des ersten Gehäuses 10 haben jeweils eine Vertiefung in Form eines Schlitzes 15, in welche ein Teilbereich des Versteifungselements 50 eingeschoben werden kann. Die Vertiefung 15 der ersten Gehäuseschale 11 und die Vertiefung 15 der zweiten Gehäuseschale 12 bilden bei aneinander liegenden Gehäuseschalen 11, 12 einen zu dem Versteifungselement 50 komplementären Hohlraum 15, 15.

Ausserdem erkannt man in Fig. 12 zwei Erhebungen bzw. Aufsätze 60 im Innern der zweiten Gehäuseschale 12, welche zusammen mit entsprechenden Erhebungen bzw. Aufsätzen 60 im Innern der ersten Gehäuseschale 11 Stützrippen bilden, wenn die beiden Gehäuseschalen 11, 12 zusammengesetzt sind und mit ihrem jeweiligen Schalen-Berührungsbereich B aneinander liegen. Der Übergangsbereich B3 zwischen der Innenwand der ersten und der zweiten Gehäuseschale 11, 12 und der jeweiligen Erhebung bzw. dem jeweiligen Aufsatz 60 kann abgerundet sein (nihct gezeigt). Der Querschnitt entlang einer zur Gehäuseachse A parallelen Horizontalebene ist linsenförmig ausbildet.

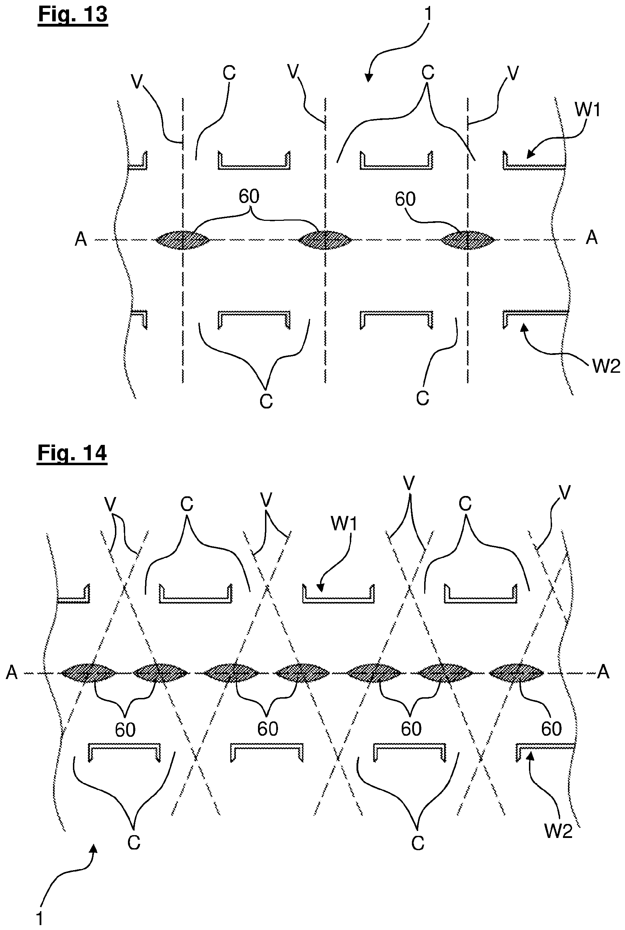

In Fig. 13 ist eine schematische Längsschnitt-Ansicht eines zweiten Ausführungsbeispiels des erfindungsgemässen Luftverteilers 1 gezeigt. Man erkennt die Öffnungen C des ersten Seitenwandbereichs W1 und des zweiten Seitenwandbereichs W2. Die Öffnungen C des ersten Seitenwandbereichs W1 und die Öffnungen C des zweiten Seitenwandbereichs W2 sind entlang der Längsrichtung der Gehäuseachse A gegenüberliegend, d.h. an denselben Orten entlang der Längsrichtung angeordnet. Am Schnittpunkt (Ort P) zwischen einer Verbindungslinie V zweier gegenüberliegender Öffnungen C und der Gehäuseachse A ist jeweils eine Stützrippe 60 angeordnet. Diese Stützrippen 60 erhöhen die mechanische Stabilität des Luftverteiler-Gehäuses. Gleichzeitig wirken sie als Barriere für Luftschall und wirken so lästigem Telefonieschall zwischen den in die Öffnungen mündenden Luftleitungen (nicht gezeigt) entgegen.

In Fig. 14 ist eine schematische Längsschnitt-Ansicht eines dritten Ausführungsbeispiels des erfindungsgemässen Luftverteilers 1 gezeigt. Man erkennt die Öffnungen C des ersten Seitenwandbereichs W1 und des zweiten Seitenwandbereichs W2. Die Öffnungen C des ersten Seitenwandbereichs W1 sind zu den Öffnungen C des zweiten Seitenwandbereichs W2 entlang der Längsrichtung der Gehäuseachse A schräg gegenüberliegend, d.h. an jeweils zueinander versetzten Orten entlang der Längsrichtung angeordnet. Ähnlich wie in Fig. 13 ist am Schnittpunkt (Ort P) zwischen einer Verbindungslinie V zweier schräg gegenüberliegender Öffnungen C und der Gehäuseachse A jeweils eine Stützrippe 60 angeordnet. Diese Stützrippen 60 erhöhen die mechanische Stabilität des Luftverteiler-Gehäuses. Gleichzeitig wirken sie als Barriere für Luftschall und wirken so lästigem Telefonieschall zwischen den in die Öffnungen mündenden Luftleitungen (nicht gezeigt) entgegen.

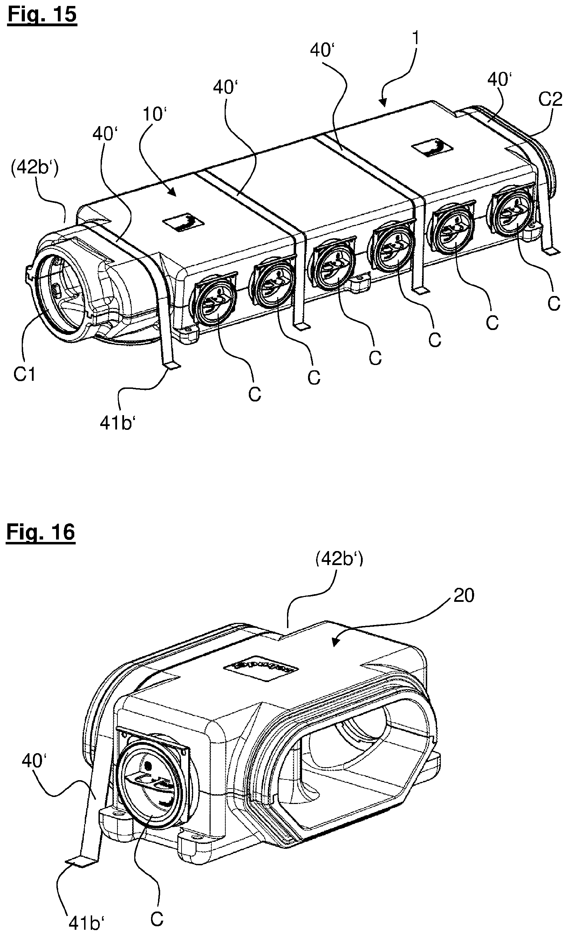

In Fig. 15 ist ein erstes Gehäuse eines vierten Ausführungsbeispiels des erfindungsgemässen Luftverteilers 1 in einer Perspektivansicht gezeigt. Man erkennt, dass der Luftverteiler 1 mit vier Befestigungsbändern 40' an einer (nicht gezeigten) Oberfläche fixiert ist. Jedes Befestigungsband 40' erstreckt sich ähnlich wie die Befestigungsbügel 40 in Fig. 1 entlang des Deckenwandbereichs W3 sowie entlang des ersten Seitenwandbereichs W1 und entlang des zweiten Seitenwandbereichs W2 an der Aussenseite des Luftverteilers 1. Jedes Befestigungsband 40' greift in korrespondierende Vertiefungen an der Aussenseite des ersten Gehäuses 10' des Luftverteilers 1 ein. Das Befestigungsband 40' hat an seinem ersten Ende 41b' sowie an seinem (nicht sichtbaren) zweiten Ende 42b' jeweils ein Loch für ein Fixiermittel, z.B. eine Schraube, ein Nagel oder dgl..

In Fig. 16 ist ein zweites Gehäuse 20' des vierten Ausführungsbeispiels des erfindungsgemässen Luftverteilers 1 in einer Perspektivansicht gezeigt, welches ebenfalls mit einem Befestigungsband 40', wie anhand von Fig. 15 gezeigt und beschrieben, an einer (nicht gezeigten) Oberfläche fixiert ist.

### Bezugszeichenliste

- 1: Luftverteiler
- 10: erstes Gehäuse (erster Gehäusetyp)
- 10': erstes Gehäuse (erster Gehäusetyp)
- 11: erste Gehäuseschale des ersten Gehäuses
- 12: zweite Gehäuseschale des ersten Gehäuses
- 20: zweites Gehäuse (zweiter Gehäusetyp)
- 20': zweites Gehäuse (zweiter Gehäusetyp)
- 21: erste Gehäuseschale des zweiten Gehäuses
- 22: zweite Gehäuseschale des zweiten Gehäuses
- A: Gehäuseachse
- B: Schalen-Berührungsbereich
- C: Öffnungen
- P: Ort einer Stützrippe
- V: Verbindungslinie
- 14: erste Aussparungen bzw. Einbuchtungen
- 14: zweite Aussparungen bzw. Einbuchtungen
- 15: Vertiefung / Schlitz
- 30: weiteres (drittes) Gehäuse (weiterer, dritter Gehäusetyp)
- 31: erste Gehäuseschale des dritten Gehäuses
- 32: zweite Gehäuseschale des dritten Gehäuses
- C1: erste Hauptöffnung
- C2: zweite Hauptöffnung
- C3: alternative bzw. weitere Hauptöffnung
- C1*: alternative bzw. weitere Hauptöffnung
- D: Deckel (Revisionsdeckel)
- W1: erster Seitenwandbereich
- W2: zweiter Seitenwandbereich
- W3: Deckenwandbereich
- W4: Bodenwandbereich
- 40: Befestigungsbügel
- 40': Befestigungsband
- 41: erster Endbereich
- 41a: erste höhenverstellbare Schiene
- 41b: erstes Ende
- 41b': erstes Ende
- 42: zweiter Endbereich
- 42a: zweite höhenverstellbare Schiene
- 42b: zweites Ende
- 42b': zweites Ende
- 43: Abschnitt / Zwischenabschnitt zwischen Endbereichen 41 und 42
- 43c: erster Übergangsbereich
- 43d: zweiter Übergangsbereich
- 43e: Eingriffsformationen
- 50: Versteifungselement
- 51: Platte
- 52: Loch
- 53: Hülse
- 54: Bügel mit U-Form
- 60: Erhebung bzw. Aufsatz der Stützrippe 60, 60
- Q: Querschnitt der Stützrippe 60, 60
- B3: Übergangsbereich
- B4: Übergangsbereich

## Patentansprüche

1. Luftverteiler (1) zur Luftverteilung in einem Luftverteilungssystem, wobei der Luftverteiler (1) mindestens ein Gehäuse (10; 20) mit jeweils mehreren Öffnungen (C) für das Einströmen von Luft in das Gehäuse (10; 20) oder für das Ausströmen von Luft aus dem Gehäuse (10; 20) aufweist, wobei das mindestens eine Gehäuse (10; 20) eine erste Gehäuseschale (11; 21) aus expandiertem Polymermaterial und eine zweite Gehäuseschale (12; 22) aus expandiertem Polymermaterial aufweist, die in einem Schalen-Berührungsbereich (B) aneinander anliegen und eine Luftverteilungskammer bilden, wobei die mehreren Öffnungen (C) des Gehäuses (10; 20) in dem Schalen-Berührungsbereich (B) angeordnet sind, und wobei der Luftverteiler (1) einen den Schalen-Berührungsbereich (B) aufweisenden ersten Seitenwandbereich (W1) und einen den Schalen-Berührungsbereich (B) aufweisenden zweiten Seitenwandbereich (W2) sowie einen sich zwischen den beiden Seitenwandbereichen (W1, W2) erstreckenden Deckenwandbereich (W3) und einen sich zwischen den beiden Seitenwandbereichen (W1, W2) erstreckenden Bodenwandbereich (W4) enthält, **dadurch gekennzeichnet, dass** der Luftverteiler (1) in dem ersten Seitenwandbereich (W1) und in dem zweiten Seitenwandbereich (W2) jeweils ein Versteifungselement (50) enthält, welches in das expandierte Polymermaterial eingebettet ist.

2. Luftverteiler (1) nach Anspruch 1, **dadurch gekennzeichnet, dass** die mehreren Öffnungen (C) durch erste Aussparungen bzw. Einbuchtungen (14) der Schalenwand an einem Rand der ersten Gehäuseschale (11; 21) und/oder durch zweite Aussparungen bzw. Einbuchtungen (14) der Schalenwand an einem Rand der zweiten Gehäuseschale (12; 22) gebildet sind.

3. Luftverteiler (1) nach Anspruch 2, **dadurch gekennzeichnet, dass** die Aussparungen (14) der ersten Gehäuseschale (11; 21) zu den Aussparungen (14) der zweiten Gehäuseschale (12; 22) symmetrisch sind.

4. Luftverteiler (1) nach einem der vorherigen Ansprüche, **dadurch gekennzeichnet, dass** sich das Versteifungselement (50) über den Schalen-Berührungsbereich (B) hinweg von der ersten Gehäuseschale (11; 21) zu der zweiten Gehäuseschale (12; 22) hin erstreckt.

5. Luftverteiler (1) nach einem der vorherigen Ansprüche, **dadurch gekennzeichnet, dass** die erste Gehäuseschale (11; 21) und die zweite Gehäuseschale (12; 22) in ihrem jeweiligen Schalen-Berührungsbereich (B) eine Vertiefung (15) aufweisen, in welche jeweils ein Teilbereich des Versteifungselements (50) eingeschoben werden kann, und wobei optional die Vertiefung (15) der ersten Gehäuseschale (11; 21) und die Vertiefung (15) der zweiten Gehäuseschale (12; 22) bei aneinander liegenden Gehäuseschalen (11, 12; 21, 22) einen zu dem Versteifungselement (50) komplementären Hohlraum (15, 15) bilden.

6. Luftverteiler (1) nach Anspruch 5 **dadurch gekennzeichnet, dass** das Elastizitätsmodul des Versteifungselements (50) grösser als das Elastizitätsmodul des expandierten Polymermaterials ist und eine Abmessung, z.B. eine Länge, Breite oder Dicke, des komplementären Hohlraums (15, 15) in mindestens einer Raumrichtung kleiner als die entsprechende Abmessung, z.B. eine Länge, Breite oder Dicke, des Versteifungselements (50) ist.

7. Luftverteiler (1) nach einem der vorherigen Ansprüche, **dadurch gekennzeichnet, dass** der Luftverteiler (1) in dem mindestens einen Gehäuse (10; 20) jeweils mindestens eine Stützrippe (60) enthält, welche sich zwischen dem Deckenwandbereich (W3) und dem Bodenwandbereich (W4) in der Luftverteilungskammer erstreckt.

8. Luftverteiler (1) nach Anspruch 7, **dadurch gekennzeichnet, dass** die erste Gehäuseschale (11; 21) und die zweite Gehäuseschale (12; 22) jeweils mindestens eine Erhebung bzw. einen Aufsatz aufweisen, welche bzw. welcher in dem Schalen-Berührungsbereich (B) aneinander liegen und gemeinsam die mindestens eine Stützrippe (60) bilden.

9. Luftverteiler (1) nach Anspruch 7 oder 8, **dadurch gekennzeichnet, dass** mehrere Öffnungen (C) des mindestens einen Gehäuses (10; 20) in dem ersten Seitenwandbereich (W1) und mehrere Öffnungen (C) des mindestens einen Gehäuses (10; 20) in dem zweiten Seitenwandbereich (W2) angeordnet sind, wobei eine sich zwischen dem Deckenwandbereich (W3) und dem Bodenwandbereich (W4) erstreckende jeweilige Stützrippe (60) im Innern des Luftverteilers (1) an einem Ort (P) angeordnet ist, welcher sich auf einer geraden Verbindungslinie zwischen einer Öffnung (C) des ersten Seitenwandbereichs (W1) und einer zu dieser Öffnung nächstliegenden Öffnung (C) des zweiten Seitenwandbereichs (W2) befindet.

10. Luftverteiler (1) nach einem der vorherigen Ansprüche, **dadurch gekennzeichnet, dass** der Luftverteiler (1) mindestens einen Befestigungsbügel (40) aufweist, welcher sich entlang des Deckenwandbereichs (W3) sowie entlang des ersten Seitenwandbereichs (W1) und entlang des zweiten Seitenwandbereichs (W2) an der Aussenseite des Luftverteilers (1) erstreckt und/oder dass der Luftverteiler (1) mindestens ein Befestigungsband (40') aufweist, welches sich entlang des Deckenwandbereichs (W3) sowie entlang des ersten Seitenwandbereichs (W1) und entlang des zweiten Seitenwandbereichs (W2) an der Aussenseite des Luftverteilers (1) erstreckt.

11. Luftverteiler (1) nach einem der vorherigen Ansprüche, **dadurch gekennzeichnet, dass** das expandierte Polymermaterial der ersten Gehäuseschale (11; 21) und der zweiten Gehäuseschale (12; 22) ein expandiertes Homo-Polymerisat wie z.B. expandiertes Polypropylen (EPP), expandiertes Polystyrol (EPS), expandiertes Polyethylen (EPE) oder expandiertes Polylactid (EPLA), oder ein Gemisch aus expandiertem Homo-Polymerisat wie z.B. expandiertem Polypropylen (EPP), expandiertem Polystyrol (EPS), expandiertem Polyethylen (EPE) oder expandiertem Polylactid (EPLA), ist und/oder dass das expandierte Polymermaterial der ersten Gehäuseschale (11; 21) und der zweiten Gehäuseschale (12; 22) ein expandiertes Co-Polymerisat ist, welches zumindest Propylen, Styrol, Ethylen oder Milchsäure als Komponente aufweist.

12. Luftverteiler (1) nach einem der vorherigen Ansprüche, **dadurch gekennzeichnet, dass** der Deckenwandbereich (W3) und/oder der Bodenwandbereich (W4) zumindest in Teilbereichen eine sich entlang des jeweiligen Wandbereichs (W3, W4) erstreckende Versteifungsrippe aufweisen.

13. Luftverteiler (1) nach einem der vorherigen Ansprüche, **dadurch gekennzeichnet, dass** das mindestens eine Gehäuse (10; 20) zusätzlich zu den jeweils mehreren Öffnungen (C) für das Einströmen und Ausströmen von Luft in das bzw. aus dem Gehäuse (10; 20) noch eine Inspektionsöffnung (C3) aufweist, welche mittels eines Inspektionsdeckels (D) verschliessbar ist.

14. Luftverteiler (1) nach einem der vorherigen Ansprüche, **dadurch gekennzeichnet, dass** in dem mindestens einen Gehäuse (10; 20) mindestens ein Funktionselement, insbesondere Sensor, einen Sender oder einen Empfänger, enthalten ist.

## Claims

1. Air distributor (1) for air distribution in an air distribution system, wherein the air distributor (1) comprises at least one housing (10; 20) with a respective plurality of openings (C) for the inflow of air into the housing (10; 20) or for the outflow of air out of the housing (10; 20), wherein the at least one housing (10; 20) comprises a first housing shell (11; 21) of expanded polymer material and a second housing shell (12; 22) of expanded polymer material, which lie against one another in a shell contact region (B) and form an air distribution chamber, wherein the plurality of openings (C) of the housing (10; 20) are arranged in the shell contact region (B), and wherein the air distributor (1) comprises a first sidewall region (W1) comprising the shell contact region (B), a second sidewall region (W2) comprising the shell contact region (B), a ceiling wall region (W3) extending between the two sidewall regions (W1, W2), and a floor wall region (W4) extending between the two sidewall regions (W1, W2), **characterized in that** the air distributor (1) contains in each of the the first sidewall region (W1) and the second sidewall region (W2)a stiffening element (50), which is embedded in the expanded polymer material.

2. Air distributor (1) according to Claim 1, **characterized in that** the plurality of openings (C) are formed by first cutouts or recesses (14) in the shell wall at an edge of the first housing shell (11; 21) and/or by second cutouts or recesses (14) in the shell wall at an edge of the second housing shell (12; 22).

3. Air distributor (1) according to Claim 2, **characterized in that** the cutouts (14) in the first housing shell (11; 21) are symmetrical to the cutouts (14) in the second housing shell (12; 22).

4. Air distributor (1) according to any one of the preceding claims, **characterized in that** the stiffening element (50) extends across the shell contact region (B) from the first housing shell (11; 21) to the second housing shell (12; 22).

5. Air distributor (1) according to any one of the preceding claims, **characterized in that** the first housing shell (11; 21) and the second housing shell (12; 22), in their respective shell contact region (B), have a depression (15) into which a respective subregion of the stiffening element (50) can be inserted, and wherein optionally the depression (15) in the first housing shell (11; 21) and the depression (15) in the second housing shell (12; 22), when the housing shells (11, 12; 21, 22) lie against one another, form a cavity (15, 15) being complementary to the stiffening element (50).

6. Air distributor (1) according to Claim 5, **characterized in that** the modulus of elasticity of the stiffening element (50) is greater than the modulus of elasticity of the expanded polymer material and a dimension, for example a length, width or thickness, of the complementary cavity (15, 15) in at least one spatial direction is smaller than the corresponding dimension, for example a length, width or thickness, of the stiffening element (50).

7. Air distributor (1) according to any one of the preceding claims, **characterized in that** the air distributor (1) in the at least one housing (10; 20) contains at least one respective supporting rib (60), which extends between the ceiling wall region (W3) and the floor wall region (W4) in the air distribution chamber.

8. Air distributor (1) according to Claim 7, **characterized in that** the first housing shell (11; 21) and the second housing shell (12; 22) each have at least one elevation or attachment, which lie against one another in the shell contact region (B) and together form the at least one supporting rib (60).

9. Air distributor (1) according to Claim 7 or 8, **characterized in that** a plurality of openings (C) of the at least one housing (10; 20) are arranged in the first sidewall region (W1) and a plurality of openings (C) of the at least one housing (10; 20) are arranged in the second sidewall region (W2), wherein a respective supporting rib (60), which extends between the ceiling wall region (W3) and the floor wall region (W4), is arranged in the interior of the air distributor (1) at a location (P) which is on a straight connecting line between an opening (C) of the first sidewall region (W1) and an opening (C) of the second sidewall region (W2) that is closest to that opening.

10. Air distributor (1) according to any one of the preceding claims, **characterized in that** the air distributor (1) comprises at least one fastening bracket (40), which extends along the ceiling wall region (W3) and also along the first sidewall region (W1) and along the second sidewall region (W2) on the outer side of the air distributor (1), and/or **in that** the air distributor (1) comprises at least one fastening strip (40') which extends along the ceiling wall region (W3) and also along the first sidewall region (W1) and along the second sidewall region (W2) on the outer side of the air distributor (1).

11. Air distributor (1) according to any one of the preceding claims, **characterized in that** the expanded polymer material of the first housing shell (11; 21) and of the second housing shell (12; 22) is an expanded homopolymer, for example expanded polypropylene (EPP), expanded polystyrene (EPS), expanded polyethylene (EPE) or expanded polylactide (EPLA), or is a mixture of expanded homopolymer, for example expanded polypropylene (EPP), expanded polystyrene (EPS), expanded polyethylene (EPE) or expanded polylactide (EPLA), and/or **in that** the expanded polymer material of the first housing shell (11; 21) and of the second housing shell (12; 22) is an expanded copolymer comprising at least propylene, styrene, ethylene or lactic acid as component.

12. Air distributor (1) according to any one of the preceding claims, **characterized in that** the ceiling wall region (W3) and/or the floor wall region (W4), at least in subregions, have a stiffening rib which extends along the respective wall region (W3, W4).

13. Air distributor (1) according to any one of the preceding claims, **characterized in that** the at least one housing (10; 20), in addition to the respective plurality of openings (C) for the inflow and outflow of air into and out of the housing (10; 20), also has an inspection opening (C3) which can be closed by means of an inspection cover (D).

14. Air distributor (1) according to any one of the preceding claims, **characterized in that** the at least one housing (10; 20) contains at least one functional element, in particular sensor, a transmitter or a receiver.

## Revendications

1. Distributeur d'air (1) servant à la distribution d'air dans un système de distribution d'air, le distributeur d'air (1) présentant au moins un boîtier (10 ; 20) comportant respectivement plusieurs ouvertures (C) pour l'entrée d'air dans le boîtier (10 ; 20) ou pour la sortie d'air hors du boîtier (10 ; 20), l'au moins un boîtier (10 ; 20) présentant une première coque de boîtier (11 ; 21) en matière polymère expansée et une deuxième coque de boîtier (12 ; 22) en matière polymère expansée, lesquelles s'appuient l'une contre l'autre dans une région de contact de coque (B) et forment une chambre de distribution d'air, les plusieurs ouvertures (C) du boîtier (10 ; 20) étant disposées dans la région de contact de coque (B), et le distributeur d'air (1) contenant une première région de paroi latérale (W1) présentant la région de contact de coque (B) et une deuxième région de paroi latérale (W2) présentant la région de contact de coque (B) ainsi qu'une région de paroi supérieure (W3) s'étendant entre les deux régions de paroi latérales (W1, W2) et une région de paroi inférieure (W4) s'étendant entre les deux régions de paroi latérales (W1, W2), **caractérisé en ce que** le distributeur d'air (1) contient dans la première région de paroi latérale (W1) et dans la deuxième région de paroi latérale (W2) respectivement un élément de raidissement (50), lequel est noyé dans la matière polymère expansée.

2. Distributeur d'air (1) selon la revendication 1, **caractérisé en ce que** les plusieurs ouvertures (C) sont formées par des premiers creux ou renfoncements (14) de la paroi de coque au niveau d'un bord de la première coque de boîtier (11 ; 21) et/ou par des deuxièmes creux ou renfoncements (14) de la paroi de coque au niveau d'un bord de la deuxième coque de boîtier (12 ; 22).

3. Distributeur d'air (1) selon la revendication 2, **caractérisé en ce que** les creux (14) de la première coque de boîtier (11 ; 21) sont symétriques par rapport aux creux (14) de la deuxième coque de boîtier (12 ; 22).

4. Distributeur d'air (1) selon l'une des revendications précédentes, **caractérisé en ce que** l'élément de raidissement (50) s'étend au-delà de la région de contact de coque (B) à partir de la première coque de boîtier (11 ; 21) vers la deuxième coque de boîtier (12 ; 22).

5. Distributeur d'air (1) selon l'une des revendications précédentes, **caractérisé en ce que** la première coque de boîtier (11 ; 21) et la deuxième coque de boîtier (12 ; 22) présentent, dans leur région de contact de coque (B) respective, un évidement (15) dans lequel respectivement une région partielle de l'élément de raidissement (50) peut être introduite, et éventuellement l'évidement (15) de la première coque de boîtier (11 ; 21) et l'évidement (15) de la deuxième coque de boîtier (12 ; 22) formant, lorsque les coques de boîtier (11, 12 ; 21, 22) sont en appui l'une contre l'autre, une cavité (15, 15) complémentaire à l'élément de raidissement (50).

6. Distributeur d'air (1) selon la revendication 5, **caractérisé en ce que** le module d'élasticité de l'élément de raidissement (50) est supérieur au module d'élasticité de la matière polymère expansée et une dimension, par exemple une longueur, une largeur ou une épaisseur, de la cavité complémentaire (15, 15) est plus petite dans au moins une direction spatiale que la dimension correspondante, par exemple une longueur, une largeur ou une épaisseur, de l'élément de raidissement (50).

7. Distributeur d'air (1) selon l'une des revendications précédentes, **caractérisé en ce que** le distributeur d'air (1) contient dans l'au moins un boîtier (10 ; 20) respectivement au moins une nervure de support (60), laquelle s'étend entre la région de paroi supérieure (W3) et la région de paroi inférieure (W4) dans la chambre de distribution d'air.

8. Distributeur d'air (1) selon la revendication 7, **caractérisé en ce que** la première coque de boîtier (11 ; 21) et la deuxième coque de boîtier (12 ; 22) présentent respectivement au moins un rehaussement ou un élément rapporté, lesquels s'appuient les uns contre les autres dans la région de contact de coque (B) et forment ensemble l'au moins une nervure de support (60).

9. Distributeur d'air (1) selon la revendication 7 ou 8, **caractérisé en ce que** plusieurs ouvertures (C) de l'au moins un boîtier (10 ; 20) sont disposées dans la première région de paroi latérale (W1) et plusieurs ouvertures (C) de l'au moins un boîtier (10 ; 20) sont disposées dans la deuxième région de paroi latérale (W2), une nervure de support (60) respective s'étendant entre la région de paroi supérieure (W3) et la région de paroi inférieure (W4) étant disposée à l'intérieur du distributeur d'air (1) en un emplacement (P) qui se trouve sur une ligne de liaison rectiligne entre une ouverture (C) de la première région de paroi latérale (W1) et une ouverture (C), la plus proche de cette ouverture, de la deuxième région de paroi latérale (W2).

10. Distributeur d'air (1) selon l'une des revendications précédentes, **caractérisé en ce que** le distributeur d'air (1) présente au moins un étrier de fixation (40), lequel s'étend le long de la région de paroi supérieure (W3) ainsi que le long de la première région de paroi latérale (W1) et le long de la deuxième région de paroi latérale (W2) au niveau du côté extérieur du distributeur d'air (1) et/ou **en ce que** le distributeur d'air (1) présente au moins une bande de fixation (40'), laquelle s'étend le long de la région de paroi supérieure (W3) ainsi que le long de la première région de paroi latérale (W1) et le long de la deuxième région de paroi latérale (W2) au niveau du côté extérieur du distributeur d'air (1).

11. Distributeur d'air (1) selon l'une des revendications précédentes, **caractérisé en ce que** la matière polymère expansée de la première coque de boîtier (11 ; 21) et de la deuxième coque de boîtier (12 ; 22) est un homopolymère expansé, par exemple du polypropylène expansé (EPP), du polystyrène expansé (EPS), du polyéthylène expansé (EPE) ou de l'acide polylactique expansé (EPLA), ou un mélange d'homopolymère expansé, par exemple de polypropylène expansé (EPP), de polystyrène expansé (EPS), de polyéthylène expansé (EPE) ou d'acide polylactique expansé (EPLA), et/ou **en ce que** la matière polymère expansée de la première coque de boîtier (11 ; 21) et de la deuxième coque de boîtier (12 ; 22) est un copolymère expansé, lequel présente au moins du polypropylène, du styrène, de l'éthylène ou de l'acide lactique en tant que composant.

12. Distributeur d'air (1) selon l'une des revendications précédentes, **caractérisé en ce que** la région de paroi supérieure (W3) et/ou la région de paroi inférieure (W4) présentent au moins dans des régions partielles une nervure de raidissement s'étendant le long de la région de paroi (W3, W4) respective.

13. Distributeur d'air (1) selon l'une des revendications précédentes, **caractérisé en ce que** l'au moins un boîtier (10 ; 20) présente, en plus des respectivement plusieurs ouvertures (C) pour l'entrée et la sortie d'air dans le boîtier (10 ; 20) et hors de celui-ci, encore une ouverture d'inspection (C3), laquelle peut être fermée au moyen d'un couvercle d'inspection (D).

14. Distributeur d'air (1) selon l'une des revendications précédentes, **caractérisé en ce qu'**au moins un élément fonctionnel, en particulier un capteur, un émetteur ou un récepteur, est contenu dans l'au moins un boîtier (10 ; 20).
